# FASCICULE DE BREVET EUROPEEN

(11) **EP 1 557 068 B1**
(45) Date de publication et mention de la délivrance du brevet: **20.02.2008**
(21) Numéro de dépôt: 03778412.1
(22) Date de dépôt: 21.10.2003
(51) Int. Cl.: H04Q 11/00

(54) **ROUTEUR PERFECTIONNE A INSERTION ET/OU EXTRACTION DE RESSOURCES**
VERBESSERTER EINFÜGUNGS-AUSFÜGUNGSROUTER
IMPROVED ROUTER WITH RESOURCE ADD-DROP FUNCTIONALITY

(30) Priorité: 21.10.2002 FR 0213053
(43) Date de publication de la demande: 27.07.2005
(73) Titulaire: Alcatel Lucent, 75008 Paris (FR)
(72) Inventeur: DOTARO, Emmanuel, F-91370 Verrières le Buisson (FR); LE SAUZE, Nicolas, 91440 Bures-Sur-Yvette (FR)
(74) Mandataire: Korakis-Ménager, Sophie
(86) Numéro de dépôt international: PCT/FR2003/003103
(87) Numéro de publication internationale: WO 2004/039120

(56) Documents cités:
- EP-A- 0 620 694
- EP-A- 1 052 808
- WO-A-01/69834
- US-A- 6 115 517

## Description

L'invention concerne le domaine des dispositifs de routage, et plus particulièrement celui du routage avec insertion et/ou extraction (« Add-Drop ») de ressources optiques ou électroniques, telles que des paquets de données, des trames de paquets (circuits en TDM), des longueurs d'onde ou des bandes de longueurs d'onde.

US-A- 6 115 517 divulgue un noeud optique conforme à la préambule de la revendication 1.

Le transfert de données au sein d'un réseau est une opération complexe, qui nécessite fréquemment, et à différents niveaux, l'insertion ou l'extraction d'informations aux données en cours de transfert, ou l'insertion ou l'extraction d'une ou plusieurs longueurs d'onde. C'est notamment le cas lorsque l'on transfère par voie optique ce que l'homme de l'art appelle des rafales de données telles que les unités de données de protocole (ou OPDU, pour Optical Protocol Data Unit). Afin de permettre de telles insertions ou extractions, il a notamment été proposé de combiner un routeur à un module d'insertion/extraction de ressources optiques. Or, ce type de combinaison ne permet pas d'effectuer une véritable insertion/extraction « à la volée », c'est-à-dire en temps réel, notamment dans le cas de rafales (ou « burst ») de données. Cet inconvénient est encore renforcé par la complexité de la mise en paquet des données aux bords des réseaux.

L'invention a donc pour but de remédier à cet inconvénient.

Elle propose à cet effet un dispositif de routage de ressources optiques ou électroniques (rafales de données, trames de paquets, longueurs d'onde ou bande(s) de longueurs d'onde), selon la revendication 1.

Ainsi, dès que les moyens de gestion apprennent qu'une ressource primaire reçue présente un ensemble d'au moins une destination comportant une destination commune à celle d'une ressource secondaire, et bien entendu, que cette ressource primaire dispose de suffisamment de place pour l'incorporer, cette ressource secondaire est extraite du second module de traitement et ajoutée à l'aide du bus d'insertion à la ressource primaire reçue, sur la ou les entrées (ou la ou les sorties) l'ayant reçue. De même, lorsque les moyens de gestion apprennent qu'une partie au moins d'une ressource primaire reçue doit être extraite, par exemple en vue d'un traitement, cette partie de ressource primaire est immédiatement extraite à l'aide du bus d'extraction et adressée au module de traitement.

Grâce à l'invention, l'insertion ou l'extraction d'une ressource secondaire peut donc s'effectuer à la volée, de sorte qu'il n'est plus nécessaire de prévoir des ports supplémentaires dédiés à l'insertion ou à l'extraction de ressources.

Considérée sous l'angle de la granularité des ressources (selon laquelle lesdites ressources peuvent être classées selon un niveau de granularité croissant (ou décroissant) tel que : paquet de données, paquet de données augmenté, longueur d'onde, bande de longueurs d'onde), l'invention consiste donc à prévoir un premier module assurant le traitement (aiguillage) de ressources primaires, présentant une première granularité (paquet augmenté, longueur d'onde ou bande de longueurs d'onde), couplé par un bus d'insertion et/ou d'extraction à un second module assurant le traitement de ressources secondaires, présentant une seconde granularité (paquet) inférieure à la première granularité.

Le dispositif selon l'invention pourra comporter des caractéristiques complémentaires qui pourront être prises séparément et/ou en combinaison, et en particulier :
- des entrées (ou des sorties) alimentées en ressources primaires de type optique. Dans ce cas, certaines au moins des entrées (ou des sorties) sont équipées de moyens de conversion optique-électronique-optique et le bus d'insertion (ou d'extraction) est de type électronique, ou bien le bus d'insertion (ou d'extraction) est à fibres optiques. En variante, certaines au moins des entrées (ou des sorties) sont équipées de moyens de conversion optique-électronique et le bus d'insertion (ou d'extraction) est de type électronique;
- des entrées (ou des sorties) alimentées en ressources primaires de type électronique. Dans ce cas, certaines au moins des entrées (ou des sorties) sont équipées de moyens de conversion électronique-optique-électronique et le bus d'insertion (ou d'extraction) est à fibres optiques, ou bien le bus d'insertion (d'extraction) est de type électronique. En variante, certaines au moins des entrées (ou des sorties) sont équipées de moyens de conversion électronique-optique et le bus d'insertion (ou d'extraction) est à fibres optiques ;
- certaines au moins des entrées et/ou certaines au moins des sorties comportant un module de régénération, en particulier de type 3R ;
- une interface d'entrée comprenant, d'une part, les entrées, et d'autre part, le bus d'insertion ou le bus d'extraction ;
- une interface de sortie comprenant, d'une part, les sorties, et d'autre part, le bus d'extraction ou le bus d'insertion ;
- des moyens de couplage pouvant comporter i) une première multiplicité d'éléments passifs de combinaison et/ou séparation couplés chacun à une voie (par exemple une fibre) de l'un des bus, ii) une deuxième multiplicité de seconds éléments passifs de combinaison et/ou séparation couplés chacun à une entrée ou une sortie, et iii) des groupes d'éléments de commutation couplés chacun, d'une part, à un groupe de voies d'un bus par l'intermédiaire du premier élément passif associé, et d'autre part, à une entrée ou une sortie par l'intermédiaire du second élément passif associé ;
- un premier module de traitement du type dit « à commutation de paquets ». Dans ce cas, le second module de traitement comprend de préférence une mémoire, éventuellement de type « partagé », capable de stocker des paquets de données, formant ressources secondaires, à ajouter à des ressources primaires reçues sous forme de rafales ou de trames de paquets de données (dans le cas de circuits en TDM), ou retirés de ressources primaires reçues sous forme de rafales ou de trames de paquets de données. Par ailleurs, les moyens de couplage peuvent être agencés de manière à ajouter le paquet de données extrait à la fin de la rafale reçue ou à l'endroit réservé de la trame de paquets de données reçue ;
- un premier module de traitement pouvant être du type dit « à commutation de bande de longueurs d'onde » ou du type dit « à commutation de longueurs d'onde » ;
- un second module de traitement agencé de manière à recevoir des paquets de données, constituant des ressources secondaires, devant être insérés par les moyens de couplage dans au moins une longueur d'onde constituant une des ressources primaires reçues, et à récupérer des paquets de données, constituant des ressources secondaires, extraits par les moyens de couplage d'au moins une longueur d'onde constituant une des ressources primaires reçues ;

D'autres caractéristiques et avantages de l'invention apparaîtront à l'examen de la description détaillée ci-après, et des dessins annexés, sur lesquels :
- la figure 1 illustre de façon schématique un premier mode de réalisation d'un dispositif de routage optique selon l'invention,
- la figure 2 est un schéma fonctionnel du mode de réalisation illustré sur la figure 1,
- les figures 3A et 3B détaillent les interfaces d'entrée et de sortie du dispositif de la figure 1, et
- la figure 4 est un schéma fonctionnel d'un second mode de réalisation d'un dispositif de routage optique utile à la compréhension de l'invention.

Les dessins annexés sont, pour l'essentiel, de caractère certain. En conséquence, ils pourront non seulement servir à compléter l'invention, mais aussi contribuer à sa définition, le cas échéant.

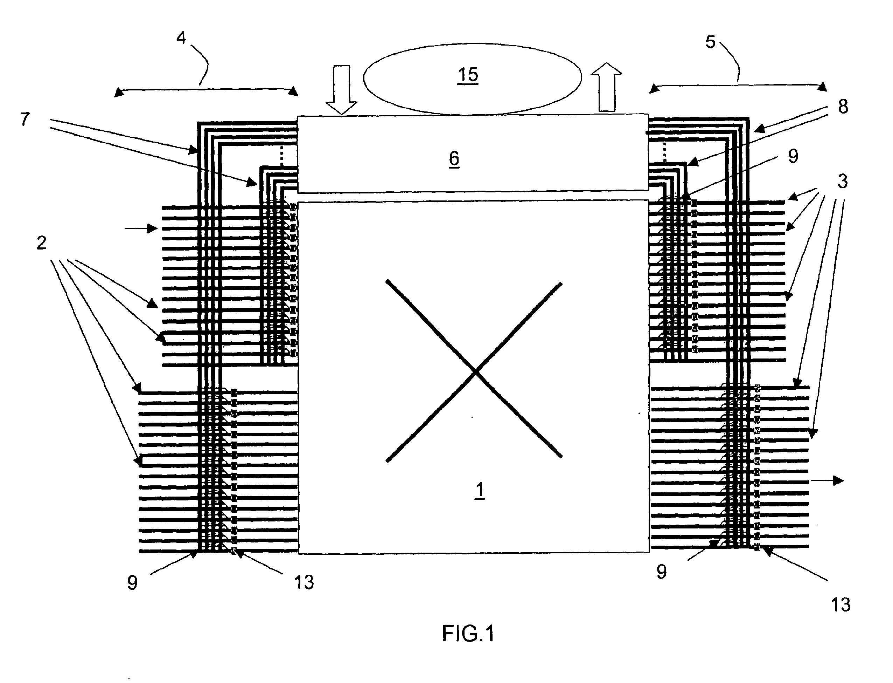

On se réfère tout d'abord aux figures 1 à 3 pour décrire un premier mode de réalisation d'un routeur optique de ressources se présentant sous la forme de paquets de données ou de rafales de paquets de données.

Dans ce qui suit, on considère que les ressources primaires à router sont de type optique, et qu'elles ne font pas l'objet, après réception, d'une conversion de type optoélectronique, et plus précisément de type optique-électronique (ou O/E) ou optique-électronique-optique (ou O/E/O). Mais, l'invention s'applique également au routage de ressources primaires de type optique faisant l'objet d'une conversion optoélectronique en entrée et/ou en sortie, ainsi qu'au routage de ressources primaires de type électronique avec ou sans conversion optoélectronique, et plus précisément de type électronique-optique (ou E/O) ou électronique-optique-électronique (ou E/O/E).

Le routeur illustré comporte un premier module de traitement réalisé sous la forme d'un module de commutation optique « non bloquante » 1 définissant n entrées et m sorties (n et m étant des entiers de préférence égaux), respectivement raccordées à des fibres optiques d'entrée 2 et de sortie 3. Ces fibres optiques d'entrée 2 et de sortie 3 sont préférentiellement intégrées dans une interface d'entrée 4 et une interface de sortie 5.

Lorsque ces interfaces d'entrée 4 et de sortie 5 sont respectivement destinées à être raccordées à un démultiplexeur et un multiplexeur, leurs fibres 2, 3 sont choisies de manière à recevoir des photons de longueur d'onde démultiplexée, qui constituent des ressources primaires. Par exemple, l'interface d'entrée 4 peut comporter 40 fibres d'entrée 2 définissant 40 canaux espacés de 50 ou 100 GHz entre les longueurs d'onde 1529 nm et 1561 nm.

Le module de commutation 1 et les fibres optiques d'entrée 2 et de sortie 3 sont choisis de manière à respectivement aiguiller et acheminer des rafales (ou « burst ») de paquets de données, telles que des unités de données de protocole (« OPDU »), de taille,fixe ou variable.

Le routeur comporte également un second module de traitement 6 constitué, ici, d'une mémoire partagée, comme illustré sur les figures, ou d'une mémoire traditionnelle couplée à un commutateur. La mémoire partagée est avantageuse car elle permet d'adresser n'importe quelle sortie du second module de traitement 6, à chaque instant.

La mémoire est destinée, d'une part, à recevoir des paquets de données, constituant des ressources secondaires, devant être transférés à une adresse définie, et d'autre part, à récupérer des paquets de données extraits (ou ressources secondaires) des rafales de paquets de données reçues (ou ressources primaires), soit en raison d'un conflit d'accès (ou « contention ») en sortie du routeur, c'est-à-dire lorsqu'il n'y a pas suffisamment de longueurs d'onde de transit disponibles en sortie du routeur, soit du fait qu'ils doivent subir un traitement local (le traitement local peut porter sur tout ou partie d'une ressource primaire reçue).

Cette mémoire, ci-après assimilée au second module de traitement 6, est raccordée par l'intermédiaire de moyens de couplage 9, qui seront décrits plus loin, d'une part, aux fibres d'entrée 2 par un ou plusieurs bus d'insertion 7, ici à voies de type fibre optique dans la mesure où les ressources primaires et secondaires sont de type optique et qu'elles ne font pas l'objet (dans cet exemple) d'une conversion optoélectronique, et d'autre part, aux fibres de sortie 3 par un ou plusieurs bus d'extraction 8, ici à voies de type fibre optique dans la mesure où les ressources secondaires traitées et les ressources primaires routées sont de type optique et qu'elles ne font pas l'objet (dans cet exemple) d'une conversion optoélectronique.

Préférentiellement, les bus d'insertion 7 et d'extraction 8 font partie respectivement des interfaces d'entrée 4 et de sortie 5. Les fibres optiques des bus 7, 8 sont préférentiellement regroupées par groupes de j, j' (de préférence j=j'=4) destinés chacun à être couplés à des groupes de i, i' (de préférence i=i'=16) fibres optiques d'entrée 2 ou de sortie 3 par l'intermédiaire des moyens de couplage 9. Mais, bien entendu, les nombres de fibres des groupes des bus d'insertion 7 et d'extraction 8 peuvent être différents.

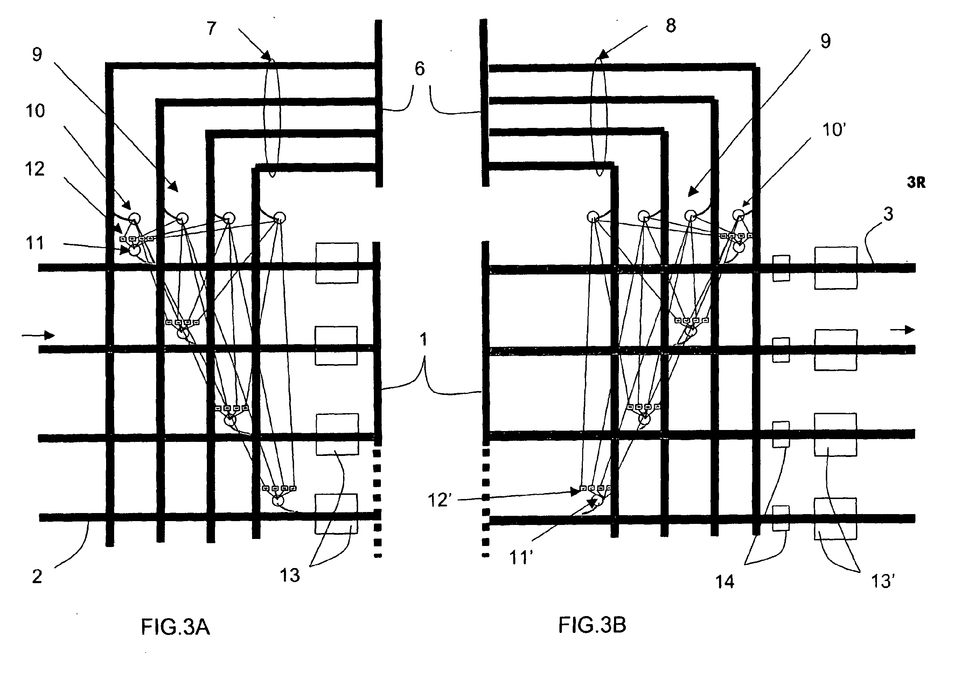

Comme illustré sur les figures 3A et 3B, les moyens de couplage 9 comportent deux parties destinées à coupler respectivement les fibres du bus d'insertion 7 aux fibres d'entrée 2 et les fibres d'extraction 8 aux fibres de sortie 3. La première partie des moyens de couplage 9 comporte, préférentiellement, d'une première part, j premiers éléments passifs de combinaison et/ou séparation 10, de type coupleur, couplés chacun à une fibre du bus d'insertion 7, d'une seconde part, i seconds éléments passifs de combinaison et/ou séparation 11, de type concentrateur, couplés chacun à une fibre d'entrée 2, et d'une troisième part, i groupes de j éléments de commutation optique 12, de préférence de type porte optique « 1 vers 1 » (1:1), tels que par exemple des SOAs (pour « Semiconductor Optical Amplifiers »), couplés chacun, d'une part, à un groupe de j fibres d'un bus d'insertion 7 par l'intermédiaire de leur premier élément passif 10 associé et, d'autre part, à une fibre d'entrée 2 par l'intermédiaire de son second élément passif 11 associé.

De même, la seconde partie des moyens de couplage 9 comporte, préférentiellement, d'une première part, j' premiers éléments passifs de combinaison et/ou séparation 10', de type concentrateur, couplés chacun à une fibre de bus d'extraction 8, d'une seconde part, i' seconds éléments passifs de combinaison et/ou séparation 11', de type coupleur, couplés chacun à une fibre de sortie 3, et d'une troisième part, i' groupes de j' éléments de commutation 12', de préférence de type porte optique « 1 vers 1 » (1 :1), tels que par exemple des SOAs, couplés chacun, d'une part, à un groupe de j' fibres d'un bus d'extraction 8 par l'intermédiaire de leur premier élément passif 10' associé et, d'autre part, à une fibre de sortie 3 par l'intermédiaire du second élément passif 11' associé.

Par ailleurs, chaque fibre d'entrée 2 comporte de préférence un module de régénération 13, de type 3R (pour « Réamplification, Remise en forme et Resynchronisation »). Préférentiellement, chaque module de régénération 3R 13 est placé en aval du lieu de couplage entre la fibre d'entrée 2 qu'il équipe et le second élément passif 11, associé à cette fibre et qui assure son couplage avec la mémoire 6.

D'autre part, chaque fibre de sortie 3 peut également comporter un module de régénération 13', par exemple de type 3R. Préférentiellement, chaque module de régénération 3R 13' est placé en aval du lieu de couplage entre la fibre de sortie 3 qu'il équipe et le second élément passif 11', associé à cette fibre et qui assure son couplage avec la mémoire partagée 6. On prévoit également sur chaque fibre de sortie 3, entre son lieu de couplage avec les moyens de couplage 9 et le module de régénération 3R 13', un élément de commutation optique 14 de type porte optique « 1 vers 1 » (1 :1), tel que par exemple un SOA, de manière à permettre la suppression en sortie du module de commutation 1 de tout ou partie d'une ressource primaire reçue devant être envoyée vers la mémoire 6 par les moyens de couplage 9.

Enfin, le dispositif de routage optique selon l'invention comporte un module de gestion 15 destiné à gérer le fonctionnement de la mémoire 6, des moyens de couplage 9 (10-12 et 10'-12'), du module de commutation 1, des interfaces d'entrée 4 et de sortie 5, et des éléments de commutation 1 :1 (14).

Le dispositif de routage optique présente deux modes de fonctionnement. Le premier mode concerne l'insertion de ressource, ici des paquets de données, tandis que le second mode concerne l'extraction de tout ou partie d'une ressource, ici des paquets de données.

Dans le premier mode de fonctionnement, lorsqu'une rafale de données, ici de type OPDU, arrive sur les fibres d'entrée 2 de l'interface d'entrée 4, le module de gestion 15 en est immédiatement averti par un système de contrôle, de type « in-band » (ou dans la bande) ou de type « out of band » (ou hors de la bande), qui effectue, par exemple, au moins l'analyse de l'occupation de la ressource primaire reçue (OPDU) et de son ensemble de destination (la ressource primaire peut en effet comporter plusieurs destinations dans le cas d'une diffusion (« broadcast » ou « multicast »)). Il vérifie ensuite dans la mémoire 6 s'il existe un ou plusieurs paquets en attente de transfert vers la destination de l'OPDU ou l'une des destinations de son ensemble de destinations.

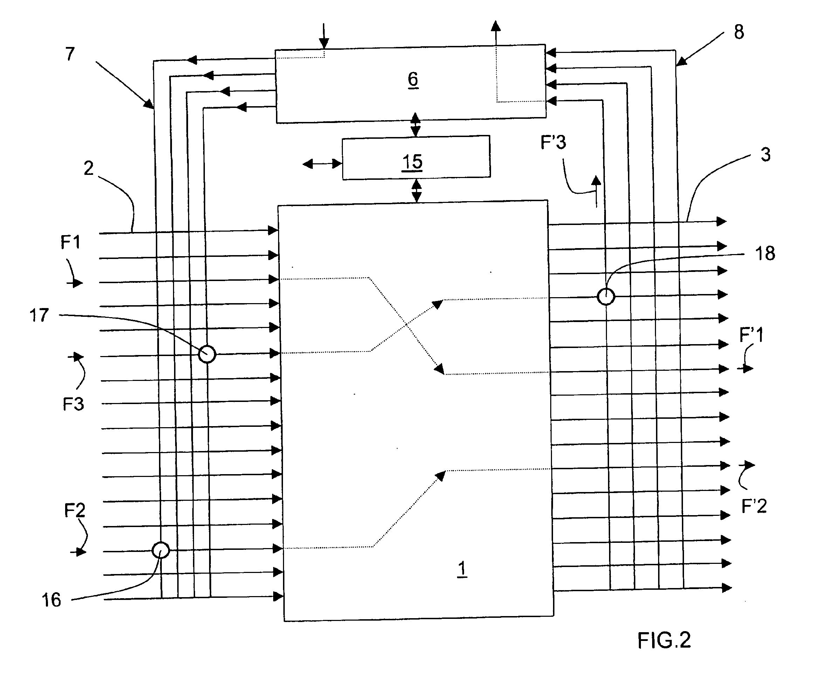

Si tel n'est pas le cas, l'OPDU est alors transmise au module de commutation 1 afin d'être aiguillée en fonction d'instructions reçues, sous le contrôle du module de gestion 15. L'OPDU aiguillée est alors collectée par une (ou des) fibre(s) de sortie 3 de l'interface de sortie 5, puis transmise, par exemple à un multiplexeur. Cette situation est illustrée sur la figure 2 par le trajet matérialisé par les flèches F1 et F'1. Il est important de noter que les bus d'insertion 7 et d'extraction 8, illustrés schématiquement sur la figure 2, ne couvrent pas forcément toutes les entrées 2 et sorties 3 qui alimentent et desservent le premier module de traitement 1, comme c'est le cas sur la figure 1.

En revanche, si un (ou des) paquet(s) de données sont en attente de transfert vers la (ou l'une des) destination(s) de l'OPDU reçu, le module de gestion 15 vérifie si la taille de l'OPDU permet de rajouter ce(s) paquet(s), et de préférence derrière cet OPDU. Cette vérification peut s'effectuer par une détection d'une information de signalisation ou du signal délivré par une photodiode, représentatif de la taille de l'OPDU (ou de la ressource primaire optique reçue). Si l'ajout est possible, le module de gestion 15 configure les moyens de couplage 9 de sorte qu'ils extraient le(s) paquet(s) de données à transférer de la mémoire 6 et l'acheminent, par le bus d'insertion 7, sur la (ou les) fibres d'entrée 2 qui a (ont) reçue l'OPDU, au niveau de son (leur) lieu de couplage avec le second élément passif 11 associé. Une rafale (ou OPDU) « augmentée » est ainsi créée, et l'information de signalisation est mise à jour par le module de gestion 15.

L'OPDU augmenté est alors transmis au module de commutation 1 (ou premier module de traitement) afin d'être aiguillé en fonction d'instructions reçues, sous le contrôle du module de gestion 15. Cet aiguillage s'effectue normalement dans la mesure ou l'OPDU augmenté est assimilé par le module de commutation 1 à une nouvelle « entité atomique ». L'OPDU augmenté et aiguillé est alors collecté par une (ou des) fibre(s) de sortie 3 de l'interface de sortie 5, puis transmis, par exemple, à un multiplexeur. Cette situation est illustrée sur la figure 2 par le trajet matérialisé par les flèches F2 et F'2 (le cercle 16 matérialise grossièrement le lieu de couplage entre la fibre d'entrée 2 ayant reçu l'OPDU et les moyens de couplage 9).

Dans le second mode de fonctionnement, l'extraction résulte soit du fait que le ou les paquets de données extraits sont arrivés à destination et doivent être transmis à un autre dispositif de l'installation de communications, soit d'un conflit d'accès (ou contention) en sortie du routeur empêchant la transmission de tout ou partie d'une ressource. Dans l'une ou l'autre de ces situations, le module de gestion 15 configure les moyens de couplage 9 de sorte qu'ils retirent le(s) paquet(s) de données désigné(s) (ou OPDU) parvenu(s) sur les fibres de sortie 3, au niveau du lieu de couplage avec le second élément passif 11' associé. Ce(s) paquet(s) est (sont) alors transmis par le bus d'extraction 8 au second module de traitement 6 afin d'être stocké(s) dans la mémoire. Le(s) paquet(s) de données sera (seront) ensuite soit transmis à un dispositif externe, soit conservé(s) dans la mémoire 6 afin d'être inséré(s) ultérieurement dans un prochain OPDU en transit vers la même destination que la sienne (leur) ou vers un ensemble de destinations dont l'une est identique à la sienne (leur). Ces deux situations sont illustrées sur la figure 2 par le trajet matérialisé par les flèches F3 et F'3 (le cercle 17 matérialise grossièrement le lieu de couplage entre la fibre d'entrée 2 ayant reçu l'OPDU et les moyens de couplage 9, et le cercle 18 matérialise grossièrement le lieu de couplage entre la fibre de sortie 3 ayant reçu l'OPDU et les moyens de couplage 9).

Le routeur qui vient d'être décrit, en référence aux figures 1 à 3, peut également servir au routage, avec insertion et/ou extraction, d'autres types de ressources primaires et secondaires, moyennant, bien entendu, certaines adaptations, notamment au niveau des types des premier 1 et second 6 modules de traitement.

Ainsi, il peut permettre le routage de ressources primaires de type trames de paquets (dans le cas des circuits en TDM) ou longueurs d'onde, avec insertion et/ou extraction de ressources primaires de type paquets.

Dans ce cas, le second module de traitement 6 demeure une mémoire, préférentiellement de type partagé, mais le module de gestion 15 est sensiblement plus simple que dans le cas décrit précédemment, dans la mesure où le chemin des ressources primaires est ici pré-établi (on parle de fonctionnement en mode « circuit » (ou connecté), par opposition au mode « paquet » (ou non connecté)). Par ailleurs, par exemple dans le cas du routage de longueurs d'onde, le premier module de traitement 1 est un commutateur de longueurs d'onde et l'on utilise la fonction MAC pour insérer des paquets dans une longueur d'onde (cela nécessite une analyse des « trous » présents dans la longueur d'onde, par exemple par détection de l'intensité d'un signal délivré par une photodiode (mode CSMA-CA), et cette analyse nécessite l'emploi, par exemple, de lignes à retard dont le retard dépend de la taille du paquet à émettre).

Par ailleurs, le routeur qui a été décrit ci-dessus peut présenter un agencement différent de celui illustré sur les figures 1 à 3, qu'il s'agisse de ressources primaires de type paquet augmenté, trame de paquets (dans le cas des circuits en TDM) ou longueur d'onde. On peut ainsi inverser les positions des bus d'insertion 7 et d'extraction 8, de sorte qu'ils soient désormais respectivement placés en amont du premier module de traitement 1 (dans l'interface d'entrée) et en aval du premier module de traitement 1 (dans l'interface de sortie).

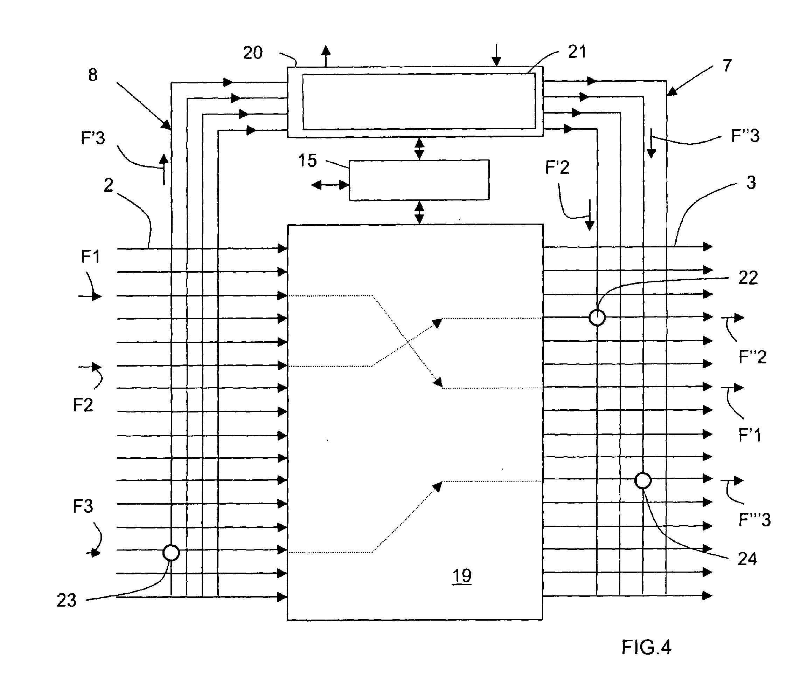

On se réfère maintenant à la figure 4 pour décrire un second mode de réalisation d'un routeur optique de ressources primaires se présentant sous la forme de bandes de longueurs d'onde.

Ce mode de réalisation présente un certain nombre de ressemblances avec celui décrit précédemment, en référence aux figures 1 à 3. Par conséquent les éléments sensiblement identiques à ces deux modes de réalisation, de par leurs fonctionnalités, sont désignés par les mêmes références et ne sont pas décrits de nouveau. Par ailleurs, comme dans le premier mode de réalisation, ce second mode de réalisation pourrait être utilisé dans le cadre du routage de ressources primaires électroniques.

Dans ce second mode de réalisation, l'interface d'entrée 4 comporte le bus d'extraction 8 qui alimente le second module de traitement 20, tandis que l'interface de sortie 5 comporte le bus d'insertion 7 qui est alimenté par ledit second module de traitement 20. Par ailleurs, le premier module de traitement est ici, par exemple, un commutateur de bande(s) de longueurs d'onde 19 et le second module de traitement est ici, par exemple, un commutateur de longueurs d'onde 20. Il s'agit ici de mettre à disposition de l'un au moins des premier et second modules de traitement 19 et 20 une ou plusieurs fonctions qui n'existent pas dans l'autre module de traitement. Par ailleurs, ce routeur optique a pour objet de tirer partie des « trous » présents dans les bandes de longueurs d'onde, et dans lesquels on peut insérer une ou plusieurs longueurs d'onde avec ou sans traitement. Par définition, une bande de longueurs d'onde présente un « trou » lorsque l'une au moins de ces longueurs d'onde n'est pas utilisée.

Le commutateur de bande(s) de longueurs d'onde 19 est alimenté en bandes de longueurs d'onde par les différentes fibres d'entrée 2 qui sont chacune adaptées de manière à permettre la circulation de plusieurs longueurs d'onde différentes. Par ailleurs, le commutateur de bande(s) de longueurs d'onde 19 alimente en bandes de longueurs d'onde les fibres de sortie 3 qui sont également chacune adaptées de manière à permettre la circulation de plusieurs longueurs d'onde différentes. Une fibre d'entrée 2 ou de sortie 3 peut ainsi définir trente deux canaux sous la forme de huit bandes de quatre longueurs d'onde différentes ou de quatre bandes de huit longueurs d'ondes différentes, voire même d'une seule bande de trente deux longueurs d'onde (contenues dans une unique fibre), par exemple.

Le commutateur de longueurs d'onde 20 est de type brasseur (ou « cross-connect »). Il est par ailleurs préférentiellement de type opaque. II comporte à cet effet un module de conversion optoélectronique 21 et/ou un module de régénération de type 3R. Par conséquent, dans ce mode de réalisation, il n'est pas utile de prévoir des modules de régénération « en ligne », c'est-à-dire sur les fibres d'alimentation 2 et/ou de sortie 3 couplées au module de commutation de bande 19.

Dans le cas d'une simple régénération, il n'y a pas d'insertion d'une nouvelle longueur d'onde (ou ressource secondaire) dans une bande de longueurs d'onde (ou ressource primaire), mais simplement réintroduction dans une bande d'une longueur d'onde régénérée. Mais, bien entendu, on peut envisager d'assurer simultanément l'insertion d'une ou plusieurs longueurs d'onde régénérées et d'une ou plusieurs nouvelles longueurs d'onde.

Comme dans le premier mode de réalisation, ce dispositif de routage optique présente deux modes de fonctionnement. Le premier mode concerne l'insertion de longueur(s) d'onde avec ou sans traitement additionnel, tandis que le second mode concerne l'extraction de longueur(s) d'onde, en vue d'un traitement éventuel.

Dans le premier mode de fonctionnement, lorsqu'une bande de longueurs d'onde, arrive sur une ou plusieurs fibres d'entrée 2 de l'interface d'entrée 4, le module de gestion 15 en est immédiatement averti. Il connaît par ailleurs à l'avance la destination de la bande de longueurs d'onde reçue, si bien qu'il a déjà configuré le module de commutation de bande 19 de manière à mettre en regard l'entrée 2 avec la sortie 3 appropriée.

Le module de gestion 15 vérifie s'il existe dans le commutateur de longueurs d'onde 20 une ou plusieurs longueurs d'onde à insérer dans une bande de longueurs d'onde reçue et dont la destination est identique à celle de cette bande ou à l'une des destinations de son ensemble de destinations.

Si il n'y en a pas, le module de commutation de bande 19 aiguille la bande de longueurs d'onde sous le contrôle du module de gestion 15. La bande de longueurs d'onde aiguillée est alors collectée par une ou plusieurs fibres de sortie 3 de l'interface de sortie 5, puis transmise. Cette situation est illustrée sur la figure 4 par le trajet matérialisé par les flèches F1 et F'1. Il est important de noter que les bus d'insertion 7 et d'extraction 8, illustrés schématiquement sur la figure 4, ne couvrent pas forcément toutes les entrées 2 et les sorties 3 qui desservent et alimentent le premier module de traitement 19, comme c'est le cas sur la figure 1.

En revanche, si une ou plusieurs longueurs d'onde du commutateur de longueurs d'onde 20 présentent une destination identique à celle de la bande reçue ou à l'une des destinations de son ensemble de destinations, le module de gestion 15 vérifie s'il y a suffisamment de place disponible dans cette bande pour lui ajouter la ou les longueurs d'onde à transférer. Cette vérification peut s'effectuer par une détection d'une information de signalisation ou de l'état d'une photodiode. Si l'ajout est possible, le module de gestion 15 configure le bus d'insertion 7 et la partie 10-12 des moyens de couplage 9 de manière à ajouter à la bande de longueur d'onde, aiguillée dans le même temps par le module de commutation de bande 19 sur les fibres de sortie 3 appropriées, la (ou les) longueur(s) d'onde à transférer. Une bande de longueurs d'onde « augmentée » est ainsi créée, et l'information de signalisation est mise à jour par le module de gestion 15. Cette situation est illustrée sur la figure 4 par le trajet matérialisé par les flèches F2, F'2 et F"2 (le cercle 22 matérialise grossièrement le lieu de couplage entre les moyens de couplage 9 et la fibre de sortie 3 ayant reçu la bande de longueurs d'onde aiguillée par le module de commutation de bande 19).

Dans le second mode de fonctionnement, l'extraction résulte soit du fait que la ou les longueurs d'onde à extraire sont arrivées à destination et doivent être transmises au module de commutation de longueur d'onde 20, afin d'y subir un traitement de type conversion et/ou régénération, ou à un autre dispositif de l'installation de communications, soit d'un conflit d'accès (ou contention) en sortie du routeur.

Dans l'une ou l'autre de ces situations, le module de gestion 15 configure les moyens de couplage 9 de sorte qu'ils extraient des fibres d'entrée 2 la (ou les) longueur(s) d'onde à transférer vers le module de commutation de longueur d'onde 20, via le bus d'extraction 8. La (ou les) longueur(s) d'onde est (sont) ensuite soit transmise(s) à un dispositif externe ou au module de conversion et/ou de régénération 21, soit conservée(s) afin d'être insérée(s) ultérieurement dans une prochaine bande de longueurs d'onde en transit vers la même destination que la sienne (leur) ou vers une destination de son ensemble de destinations identique à la sienne (leur).

Dans la première situation, deux cas doivent être envisagés selon que l'extraction est partielle ou totale.

Si, la totalité de la bande de longueurs d'onde doit être extraite afin d'être transmise ou traitée, les longueurs d'onde extraites suivent le trajet matérialisé par les flèches F3 et F'3 de la figure 4 (le cercle 23 matérialise grossièrement le lieu de couplage entre la fibre d'entrée 2 ayant reçu la bande et les moyens de couplage 9). En cas de traitement local, la bande de longueurs d'onde est ensuite acheminée sur la fibre de sortie 3 appropriée via le bus d'insertion 7 et les moyens de couplage 9 suivant le trajet matérialisé par les flèches F"3 et F'''3 de la figure 4 (le cercle 24 matérialise grossièrement le lieu de couplage entre les moyens de couplage 9 et la fibre de sortie 3).

Si seulement une partie de la bande de longueurs d'onde doit être extraite afin d'être transmise ou traitée, la ou les longueurs d'onde extraites suivent le trajet matérialisé par les flèches F3 et F'3 de la figure 4 (le cercle 23 matérialise grossièrement le lieu de couplage entre la fibre d'entrée 2 ayant reçu la bande et les moyens de couplage 9), tandis que les longueurs d'onde non extraites sont aiguillées par le module de commutation de bande 19 vers la fibre de sortie 3 appropriée. Cette extraction partielle s'effectue par filtrage, par exemple au moyen d'un démultiplexeur couplé à des commutateurs de type « 1 vers 1 », ou d'un filtre accordable.

En cas de traitement local, la (ou les) longueur(s) d'onde est (sont) ensuite acheminée(s) sur la fibre de sortie 3 appropriée via le bus d'insertion 7 et les moyens de couplage 9 afin d'être intégrées au reste de la bande aiguillé par le module de commutation de bande 19. Cette situation est illustrée par les flèches F"3 et F'''3 de la figure 4 (le cercle 24 matérialise grossièrement le lieu de couplage entre les moyens de couplage 9 et la fibre de sortie 3).

Dans la seconde situation, illustrée sur la figure 4 par le trajet matérialisé par les flèches F3 et F'3, la totalité de la bande de longueurs d'onde reçue doit être extraite afin d'être réintégrée au trafic une fois la contention terminée.

Comme indiqué précédemment, dans ce second mode de réalisation, le module de commutation 19 n'est pas forcément un module de commutation de bande de longueurs d'onde. Il peut en effet s'agir d'un simple module de commutation de longueur d'onde.

L'invention ne se limite pas aux modes de réalisation de routeur décrits ci-avant, seulement à titre d'exemple, mais elle englobe toutes les variantes que pourra envisager l'homme de l'art dans le cadre des revendications ci-après.

Ainsi, dans ce qui précède on a décrit des routeurs équipés d'un bus d'insertion et d'un bus d'extraction, éventuellement regroupés en un unique bus d'insertion et d'extraction. Mais, on peut envisager que le dispositif selon l'invention ne comprenne qu'un bus d'insertion ou qu'un bus d'extraction.

Par ailleurs, dans ce qui précède, on a décrit des routeurs destinés au routage de ressources primaires de type optique, et dépourvus de moyens de conversion optoélectronique en entrée comme en sortie. Mais, l'invention s'applique également aux routeurs destinés au routage de ressources primaires de type optique et équipés de moyens de conversion optoélectronique en entrée et/ou en sortie, ainsi qu'aux routeurs destinés au routage de ressources primaires de type électronique et équipés ou non de moyens de conversion optoélectronique.

## Revendications

1. Routeur de ressources, comportant un premier module de traitement (1,19) propre à aiguiller des ressources primaires en fonction d'instructions reçues, des entrées (2) propres à alimenter en ressources primaires ledit premier module de traitement (1,19) et des sorties (3) propres à collecter des ressources primaires aiguillées par ledit premier module de traitement (1,19), et des moyens de gestion (15) destinés à gérer l'insertion de ressources secondaires dans certaines desdites ressources primaires reçues, les ressources primaires étant d'un type choisi dans le groupe comprenant les paquets de données, les rafales de paquets de données, les trames de paquets de donnés et les longueurs d'ondes, **caractérisé en ce qu'**il comporte :
- au moins un second module de traitement (6,20) comprenant une mémoire propre à stocker des ressources secondaires incluant des paquets de données à insérer dans des ressources primaires, ces ressources secondaires ayant une granularité plus fine que la granularité des ressources primaires ;
- et des moyens de couplage (9) comportant un bus d'insertion (7), lesdits moyens de gestion (15) étant aptes à analyser l'occupation d'une ressource primaire reçue sur l'une desdites entrées (2) et/ou sorties (3) et en cours de transfert et à vérifier dans la mémoire s'il existe au moins un paquet en attente de transfert vers au moins une destination commune à ladite ressource primaire reçue, lesdits moyens de couplage (9) étant propres à insérer ledit au moins un paquet stocké dans la mémoire dans ladite ressource primaire reçue sur ordre des moyens de gestion (15).

2. Routeur selon la revendication 1, **caractérisé en ce que** les moyens de couplage (9) comportent un bus d'extraction (8) et sont propres, sur ordre des moyens de gestion (15), à extraire une partie au moins d'une ressource primaire parvenue sur l'une desdites entrées (2) et/ou sorties (3) pour alimenter ledit second module de traitement (6,20) en paquets de données formant des ressources secondaires extraites, ladite mémoire étant propre à stocker lesdits paquets de données.

3. Routeur selon la revendication 1 ou 2, **caractérisé en ce que** lesdits moyens de couplage (9) comportent i) une première multiplicité de premiers éléments passifs de combinaison et/ou séparation (10,10') couplés chacun à une voie de bus (7,8), ii) une deuxième multiplicité de seconds éléments passifs de combinaison et/ou séparation (11,11') couplés chacun à une entrée (2) ou une sortie (3), et ii) des groupes d'éléments de commutation (12,12') couplés chacun, d'une part, à un groupe de voies d'un bus (7,8) par l'intermédiaire dudit premier élément passif associé (10,10') et, d'autre part, à une entrée (2) ou une sortie (3) par l'intermédiaire dudit second élément passif associé (11,11').

4. Routeur selon la revendication 1, **caractérisé en ce que** ledit premier module de traitement (1) est du type dit « à commutation de paquets».

5. Routeur selon la revendication 1, **caractérisé en ce que** ladite mémoire (6) est du type dit « partagé ».

6. Routeur selon la revendication 1, **caractérisé en ce que** lesdits moyens de couplage (9) sont agencés pour ajouter ledit paquet de données extrait à la fin de ladite rafale reçue ou à un endroit réservé de ladite trame de paquets de données reçue.

7. Routeur selon la revendication 1, **caractérisé en ce que** ledit premier module de traitement (19) est du type dit « à commutation de bande de longueurs d'onde ».

8. Routeur selon la revendication 1, **caractérisé en ce que** ledit premier module de traitement (19) est du type dit « à commutation de longueurs d'onde ».

9. Routeur selon la revendication 8, **caractérisé en ce que** ledit second module de traitement (6) est agencé de manière à recevoir des paquets de données, constituant des ressources secondaires, devant être insérés par lesdits moyens de couplage (9) dans au moins une longueur d'onde constituant une des ressources primaires reçues, et à récupérer des paquets de données, constituant des ressources secondaires, extraits par lesdits moyens de couplage (9) d'au moins une longueur d'onde constituant une des ressources primaires reçues.

## Claims

1. A resource router including a first processing module (1, 19) adapted to route primary resources as a function of instructions received, inputs (2) adapted to feed said first processing module (1, 19) with primary resources, outputs (3) adapted to collect primary resources switched by said first processing module (1, 19), and control means (15) adapted to control adding secondary resources to some of said received primary resources, the primary resources being of a type selected from the group comprising data packets, bursts of data packets, frames of data packets, and wavelengths, which router is **characterized in that** it includes:
- a second processing module (6, 20) comprising a memory adapted to store secondary resources including data packets to be added to primary resources, these secondary resources having a finer granularity than the primary resources; and
- coupling means (9) including an add bus (7), said control means (15) being suitable for analyzing the occupancy of a received primary resource received at one of said inputs (2) and/or outputs (3) and in transit and for verifying in the memory whether there exists at least one packet awaiting transfer to at least one destination in common with said received primary resource, said coupling means (9) being adapted to add said at least one packet stored in the memory in said received primary resource on an order from the control means (15).

2. A router according to claim 1, **characterized in that** said coupling means (9) include a drop bus (8), and are adapted, on an order from the control means (15), to drop at least a portion of a primary resource arriving at one of said inputs (2) and/or outputs (3) to feed said second processing module (6, 20) with data packets forming dropped secondary resources, said memory being adapted to store said data packets.

3. A router according to claim 1 or claim 2, **characterized in that** said coupling means (9) include a first multiplicity of first passive combination and/or separation elements (10, 10') each coupled to a bus channel (7, 8), a second multiplicity of second passive combination and/or separation elements (11, 11') each coupled to an input (2) or to an output (3), and groups of switching elements (12, 12') each coupled to a group of channels of a bus (7, 8) via said associated first passive element (10, 10') and to an input (2) or to an output (3) via said associated second passive element (11, 11').

4. A router according to claim 1, **characterized in that** said first processing module (1) is of "packet switching" type.

5. A router according to claim 1, **characterized in that** said memory (6) is of "shared" type.

6. A router according to claim 1, **characterized in that** said coupling means (9) are adapted to add said dropped data packet at the end of said received burst or at a reserved location of said received data packet frame.

7. A router according to claim 1, **characterized in that** said first processing module (19) is of "wavelength-band switching" type.

8. A router according to claim 1, **characterized in that** said first processing module (19) is of "wavelength switching" type.

9. A router according to claim 8, **characterized in that** said second processing module (6) is adapted to receive data packets constituting secondary resources to be added by said coupling means (9) to a wavelength constituting a received primary resource and to recover data packets constituting secondary resources dropped by said coupling means (9) from at least one wavelength constituting a received primary resource.

## Patentansprüche

1. Ressourcenrouter, der ein erstes Verarbeitungsmodul (1, 19), das geeignet ist, primäre Ressourcen in Abhängigkeit von den empfangenen Anweisungen weiterzuleiten, Eingänge (2), die geeignet sind, primäre Ressourcen an das genannte erste Verarbeitungsmodul (1, 19) weiterzuleiten, Ausgänge (3), die geeignet sind, die von dem genannten ersten Verarbeitungsmodul (1, 19) weitergeleiteten primären Ressourcen zu erfassen, sowie Verwaltungseinrichtungen (15) umfasst, die dazu bestimmt sind, das Einfügen von sekundären Ressourcen in bestimmte der genannten empfangenen primären Ressourcen zu verwalten, wobei die primären Ressourcen einen bestimmten Typ aus einer Gruppe aufweisen, die Datenpakete, Datenbursts, Paketdatenrahmen und Wellenlängen umfasst,
**dadurch gekennzeichnet, dass** er Folgendes umfasst:
- mindestens ein zweites Verarbeitungsmodul (6, 20), das einen Speicher umfasst, der geeignet ist, die sekundären Ressourcen zu speichern, die die Datenpakete beinhalten, die in die primären Ressourcen eingefügt werden sollen, wobei diese sekundären Ressourcen eine feinere Granularität aufweisen als die primären Ressourcen;
- und Koppeleinrichtungen (9), die einen Einfügebus (7) umfassen,
wobei die genannten Verwaltungseinrichtungen (15) in der Lage sind, die Belegung einer an einem der genannten Eingänge (2) und/oder Ausgänge (3) empfangenen primären Ressource, die gerade übertragen wird, zu analysieren und im Speicher zu überprüfen, ob mindestens ein Paket auf die Übertragung an mindestens ein mit der genannten empfangenen primären Ressource gemeinsames Ziel wartet, wobei die genannten Koppeleinrichtungen (9) in der Lage sind, das genannte mindestes eine, im Speicher abgelegte Paket auf Befehl der Verwaltungseinrichtungen (15) in die genannte empfangene primäre Ressource einzufügen.

2. Router gemäß Anspruch 1, **dadurch gekennzeichnet, dass** die Koppeleinrichtungen (9) einen Ausfügebus (8) umfassen und in der Lage sind, auf Befehl der Verwaltungseinrichtungen (15) zumindest einen Teil einer primären Ressource auszufügen, die an einem der genannten Eingänge (2) und/oder Ausgänge (3) angekommen ist, um das genannte zweite Verarbeitungsmodul (6, 20) mit Datenpaketen zu versorgen, die die ausgefügten sekundären Ressourcen darstellen, wobei der genannte Speicher in der Lage ist, die genannten Datenpakete zu speichern.

3. Router gemäß Anspruch 1 oder 2, **dadurch gekennzeichnet, dass** die genannten Koppeleinrichtungen (9) i) eine erste Vielzahl von ersten passiven Kombinations- und/oder Trennelementen (10, 10'), die jeweils mit einer Busstrecke (7, 8) gekoppelt sind, ii) eine zweite Vielzahl von zweiten passiven Kombinations- und/oder Trennelementen (11, 11'), die jeweils mit einem Eingang (2) oder einem Ausgang (3) gekoppelt sind, und iii) Gruppen von Vermittlungselementen (12, 12') umfassen, die jeweils einerseits über das genannte erste zugeordnete passive Element (10, 10') mit einer Gruppe von Busstrecken (7, 8) und andererseits über das genannte zweite zugeordnete passive Element (11, 11') mit einem Eingang (2) oder einem Ausgang (3) gekoppelt sind.

4. Router gemäß Anspruch 1, **dadurch gekennzeichnet, dass** das genannte erste Verarbeitungsmodul (1) vom Typ "Paketvermittlung" ist.

5. Router gemäß Anspruch 1, **dadurch gekennzeichnet, dass** der genannte Speicher (6) vom Typ "geteilt" ist.

6. Router gemäß Anspruch 1, **dadurch gekennzeichnet, dass** die genannten Koppeleinrichtungen (9) entsprechend ausgeführt sind, um das genannte ausgefügte Datenpaket am Ende des genannten empfangenen Bursts oder an einer für den genannten Datenpaketrahmen reservierten Stelle anzufügen.

7. Router gemäß Anspruch 1, **dadurch gekennzeichnet, dass** das genannte erste Verarbeitungsmodul (19) dem so genannten "Wellenband-Vermittlungstyp" entspricht.

8. Router gemäß Anspruch 1, **dadurch gekennzeichnet, dass** das genannte erste Verarbeitungsmodul (19) dem so genannten "Wellenlängen-Vermittlungstyp" entspricht.

9. Router gemäß Anspruch 8, **dadurch gekennzeichnet, dass** das genannte zweite Verarbeitungsmodul (6) entsprechend ausgeführt ist, um Datenpakete zu empfangen, die die sekundären Ressourcen darstellen, die von den genannten Koppeleinrichtungen (9) in mindestens eine Wellenlänge eingefügt werden sollen, die eine der empfangenen primären Ressourcen darstellt, und um Datenpakete zurückzuholen, die die sekundären Ressourcen darstellen, die von den genannten Koppeleinrichtungen (9) aus mindestens einer Wellenlänge ausgefügt wurden, die eine der empfangenen primären Ressourcen darstellt.
